# EUROPEAN PATENT APPLICATION

(11) **EP 3 285 483 A1**
(43) Date of publication of application: **21.02.2018**
(21) Application number: 16893254.9
(22) Date of filing: 12.09.2016
(51) Int. Cl.: H04N 5/64, H04N 5/44

(54) **TELEVISION MAINBOARD DEVICE, TELEVISION, AND TELEVISION SYSTEM**

(30) Priority: 07.03.2016 CN 201610129813
(71) Applicant: Heyi Intelligent Technology (Shenzhen) Co., Ltd., Beijing 100029 (CN)
(72) Inventor: REN, Tingming, Dongcheng District, Beijing 100029 (CN); CHEN, Dijun, Dongcheng District, Beijing 100029 (CN); AN, Shenhua, Dongcheng District, Beijing 100029 (CN); SU, Wenhua, Dongcheng District, Beijing 100029 (CN); YAO, Jian, Dongcheng District, Beijing 100029 (CN); PAN, Baiyu, Dongcheng District, Beijing 100029 (CN); WANG, Ji, Dongcheng District, Beijing 100029 (CN)
(74) Representative: Herzog, Markus
(86) International application number: PCT/CN2016/098664
(87) International publication number: WO 2017/152609

(57) **Abstract**

The present disclosure relates to a TV main board apparatus, a TV, and a TV system. The TV main board apparatus includes: a casing having at least one opening; and a TV main board accommodated in the casing, and including a first interface and a second interface that are exposed outside the casing via their respective openings, and a power converting device, wherein the first interface can connect to a power supply so as to receive first electric power, the second interface can connect to a TV so as to transmit a multimedia signal and the first electric power to the TV, and the power converting device converts the first electric power into second electric power for powering the TV main board apparatus.

## Description

### CROSS-REFERENCE TO RELATED APPLICATION

This application claims priority to Chinese Patent Application No. 201610129813.X, filed on March 7, 2016, the entire contents of which are incorporated herein by reference.

### TECHNICAL FIELD

The present disclosure relates to the field of audio-visual equipment, and in particular, to a TV main board apparatus, a TV, and a TV system.

### RELATED ART

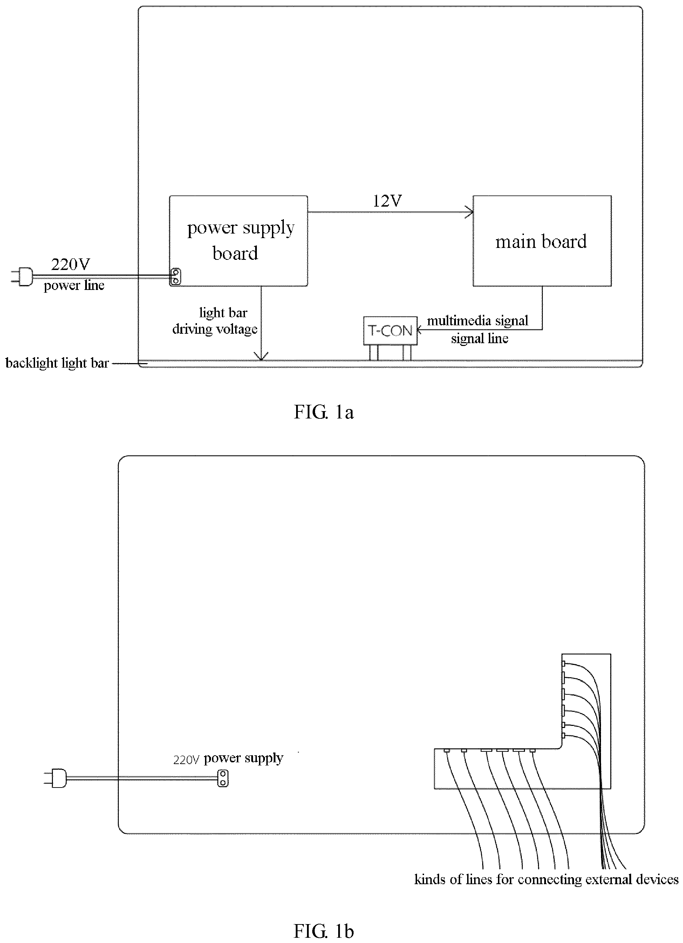

In a conventional TV, the main board is generally integrated in the TV's rear casing. Fig. 1a is a schematic diagram illustrating the connection between a TV main board and the other related components in the TV in prior art. In Fig. 1a, the TV main board is integrated in the TV's rear casing. Electric power of 220V is input into the power supply board inside the TV via the power cord. The power supply board converts one part of the electric power into DC power of 12V for powering the TV main board, and converts the other part into a light bar driving voltage for providing to the backlight light bar so as to lighten the screen. The TV main board outputs the processed multimedia signals to the subsequent components such as the time sequence controller (T-CON), which controls display on the screen body.

Fig. 1b is a rear view of a prior art TV where a TV main board is integrated.

As is evident from the above, in prior art, the TV main board is integrated in the TV's rear casing. Since there are many external ports on the main board, the TV's rear casing has to allow many leading-out wires that connect to external devices (see Fig. 1b for instance),which negatively influences the appearance, and makes it hard to place and install the external devices in a convenient way. In addition, a TV main board of this kind cannot be detached and replaced with ease, so an entire TV may have to be replaced once its main board is destroyed or needs to be upgraded.

In the prior art, there is an approach to the above problem: placing the TV main board outside the TV casing as an independent apparatus. But the approach makes it necessary to provide both the TV and the main board with a respective power supply line and provide a line to connect the TV to the main board. The complicated wiring leads to still inconvenient use and installation, and complicated and unsightly appearance.

### SUMMARY

In order to solve the above problems in the prior art, the present disclosure provides a TV main board apparatus, a TV, and a TV system, which can be used and mounted with more ease.

According to one aspect of the present disclosure, there is provided a TV main board apparatus, which comprises: a casing having at least one opening; and a TV main board accommodated in the casing, and comprising a first interface and a second interface that are exposed outside the casing via their respective openings, and a power converting device, wherein the first interface is capable of connecting to a power supply so as to receive first electric power, wherein the second interface is capable of connecting to a TV so as to transmit a multimedia signal and the first electric power to the TV, and wherein the power converting device is configured to convert the first electric power into second electric power for powering the TV main board apparatus.

According to another aspect of the present disclosure, there is provided a TV, which comprises: a transfer apparatus configured to receive a multimedia signal from a TV main board apparatus so as to allow the multimedia signal to be played and receive first electric power from the TV main board apparatus so as to supply the first electric power to a power supply board; and the power supply board configured to convert the first electric power into third electric power for powering a backlight system of the TV.

According to still another aspect of the present disclosure, there is provided a TV system, which comprises: a TV main board apparatus, a TV, one power cord, and one connection apparatus, wherein the power cord is capable of connecting the TV main board apparatus to a power supply so as to transmit first electric power to the TV main board apparatus from the power supply, the connection apparatus is configured to connect the TV main board apparatus to the TV so as to transmit a multimedia signal and the first electric power to the TV from the TV main board apparatus, and the TV main board apparatus comprises a power converting device configured to convert the first electric power into second electric power for powering the TV main board apparatus.

In each of the aspects of the present disclosure, the TV main board as an independent apparatus is separated from the TV, so the TV does not need to have a large number of leading-out wires, and the TV main board can be repaired and replaced with ease. Besides, in each of the aspects of the present disclosure, it is unnecessary to provide the TV and the main board with independent power supply lines. Instead, only connecting the TV to the TV main board apparatus and connecting the TV main board apparatus to a power supply make it possible to supply electric power to both the TV main board apparatus and the TV and transmit a signal therebetween. As a result, the whole system becomes less complicated, easier to use and install, and simple and attractive in appearance.

Additional features and aspects of the present disclosure will become apparent from the following description of exemplary examples with reference to the attached drawings.

### BRIEF DESCRIPTION OF THE DRAWINGS

The drawings, which are incorporated in and constitute part of the specification, together with the description, illustrate exemplary examples, features and aspects of the present disclosure and serve to explain the principles of the present disclosure.
Fig. 1a is a schematic diagram illustrating the TV main board in a prior art and its connection with other related components in the TV.
Fig. 1b is a back view of a prior art TV that is integrated with a TV main board.
Fig. 2 is a schematic structural diagram showing a TV main board apparatus according to an example of the present disclosure.
Figs. 3a-3d are schematic structural diagrams showing examples of a second interface.
Fig. 4 is a schematic structural diagram showing a TV according to an example of the present disclosure.
Fig. 5 is a schematic structural diagram showing a TV system according to an example of the present disclosure.
Fig. 6 is a schematic structural diagram showing an exemplary connection apparatus.
Fig. 7 is a schematic structural diagram showing the cross section of an exemplary connection line.

### DETAILED DESCRIPTION

Various exemplary examples, features and aspects of the present disclosure will be described in detail with reference to the drawings. The same reference numerals in the drawings represent parts having the same or similar functions. Although various aspects of the examples are shown in the drawings, it is unnecessary to proportionally draw the drawings unless otherwise specified.

Herein the term "exemplary" means "used as an instance or example, or explanatory". An "exemplary" example given here is not necessarily construed as being superior to or better than other examples.

Numerous details are given in the following examples for the purpose of better explaining the present disclosure. It should be understood by a person skilled in the art that the present disclosure can still be realized even without some of those details. In some of the examples, methods, means, units and circuits that are well known to a person skilled in the art are not described in detail so that the principle of the present disclosure become apparent.

### Example 1

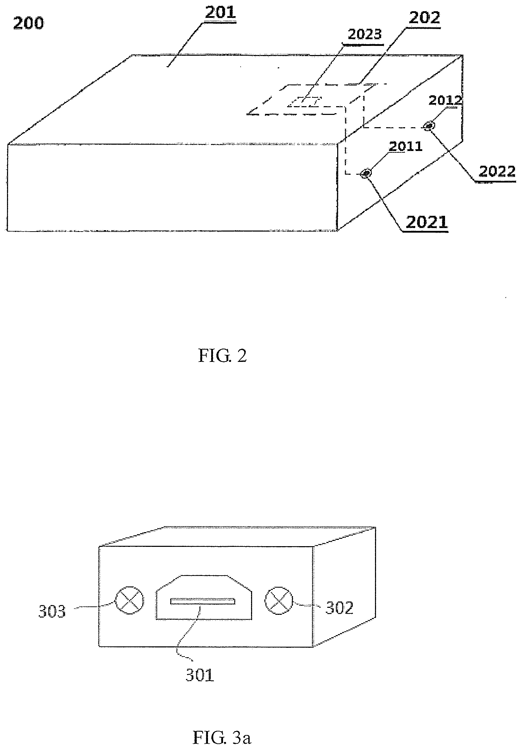

Fig. 2 is a schematic structural diagram showing a TV main board apparatus 200 according to an example of the present disclosure. As shown in Fig. 2, the TV main board apparatus 200 comprises a casing 201 having at least one opening such as openings 2011, 2012. The TV main board apparatus 200 further comprises a TV main board 202 accommodated in the casing 201, and having a first interface 2021, a second interface 2022 and a power converting device 2023. The first interface 2021 and the second interface 2022 are exposed outside the casing 201 via their respective openings 2011 and 2012. The first interface 2021 is connectable to a power supply so as to receive first electric power. The second interface 2022 is connectable to a TV so as to transmit a multimedia signal and the first electric power to the TV. The power converting device 2023 connects to the first interface 2021 and is capable of converting the first electric power into second electric power for powering the TV main board apparatus.

This example separates a TV main board as an independent apparatus from a TV, so the TV does not need to have a large number of leading-out wires, and the TV main board can be repaired and replaced with ease. In this example, it is unnecessary to provide the TV and the main board with separate power supply lines. Instead, the TV main board apparatus is capable of supplying the first electric power to the TV via the second interface so as to supply electric power to the TV and converting the first electric power into second electric power via the power converting device so as to supply electric power to itself. That way, only connecting the first interface to a power supply and connecting the second interface to the TV makes it possible to supply electric power to both the TV main board apparatus and the TV and transmit a signal therebetween. As a result, the whole system becomes less complicated, easier to use and install, and simple and attractive in appearance.

As an example, the casing 201 may be in any desired shape such as a cuboid or a cube. The present disclosure is not intended to place any restrictions on the shape of the casing. The opening primarily serves to expose an interface (e.g., a power supply interface, an audio/video interface, a cable television interface, or a USB interface) that is within the casing outside the casing, and accommodate various components such as press keys, a remote-control signal receiver, and a display. The use, shape, number, location and the like of the opening may be decided in light of actual needs, and are not restricted by the present disclosure.

As an example, the opening 2011, which accommodates the first interface 2021, and the opening 2012, which accommodates the second interface 2022, may be located on the same side of the casing 201. However, the openings 2011 and 2012 may be located on other parts of the casing (e.g., two opposite sides of the casing). The present disclosure is not intended to place any restrictions on the location.

The first interface 2021 is connectable to a power supply so as to receive first electric power. As an example of the first electric power, it may be AC power of 220V.

The second interface 2022 is connectable to a TV so as to transmit a multimedia signal and the first electric power to the TV. As an example of the multimedia signal, it may be a multimedia signal input externally or a multimedia signal that is converted by the TV main board from a built-in signal (e.g., an audio signal, a video signal and a text) of the TV main board apparatus. Such a multimedia signal may be, for instance, a high definition multimedia interface (HDMI) signal.

As an example, the power converting device may be an AC-DC power converting device that is capable of performing an AC-DC conversion on AC power of 220V (the first electric power) to generate DC power (the second electric power). The second electric power may serve to power the TV main board apparatus. The voltage of the second electric power may be set as the TV main board apparatus needs for power, such as 5V. The power converting device allows the TV main board apparatus to be connectable to a commercial power, thereby can work independently without powering by an external AC/DC adapter. The whole system becomes less complicated and easier to use and install. In addition, due to having a built-in power converting device, the TV main board apparatus does not need DC power returning from the TV. That simplifies the TV as well as the connection between the TV and the TV main board apparatus, and reduces the size of a connection apparatus between the TV and the TV main board apparatus.

As an example, a terminal configured to transmit the first electric power and a terminal configured to transmit the multimedia signal may be integrated in the second interface 2022. Due to such integrated configuration, only one line is needed to connect the TV main board apparatus to the TV, making it possible to supply electric power to the TV and transmit a multimedia signal. As a result, the whole system looks simple and attractive and is easy to use and install.

As an example, the second interface may have an HDMI. The HDMI may have more than 19 pins. The HDMI may serve to transmit a standard HDMI signal, or transmit another signal as needed, for instance, a control signal. Since there is the power converting device 2023 in the TV main board apparatus, the TV main board apparatus can supply electric power to itself. Consequently, the second interface does not need electric power supplied by an external device such as the TV, so the number of pins of the second interface only needs to meet requirements for communication between the TV main board apparatus and the TV and thus the second interface can be made smaller.

The terminals of the second interface may be arranged in the form of an array of any profile as needed.

The second interface 2022 may further have a live wire terminal and a neutral wire terminal that are configured to transmit the first electric power (e.g., electric power of 220V).

The location relationship between the HDMI and the live wire and neutral wire terminals and the profile of the second interface may be decided by a person skilled in the art in light of actual needs. The present disclosure is not meant to play any restrictions on those.

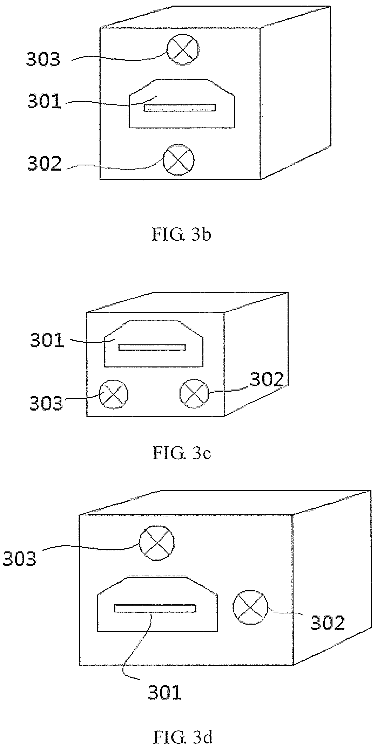

Figs. 3a-3d are schematic structural diagrams showing examples of the second interface 2022. In Fig. 3a, the live wire terminal 302 and the neutral wire terminal 303 are respectively located besides the HDMI 301. In Fig. 3b, the live wire terminal 302 and the neutral wire terminal 303 are located above and below the HDMI 301. In Fig. 3c, the live wire terminal 302 and the neutral wire terminal 303 are located below (or above) the HDMI 301. In Fig. 3d, either of the live wire terminal 302 and the neutral wire terminal 303 is located above (or below) the HDMI 301, and the other is located to the left (or right) of the HDMI 301. Although not shown in the drawings, the live wire terminal 302 and the neutral wire terminal 303 may be both located to the left or right of the HDMI 301.

It should be understood by a person skilled in the art that Figs. 3a-3d just give some examples of the second interface 2022 and its specific configuration may be devised by a person skilled in the art in light of actual needs, provided that it is capable of transmitting a multimedia signal and the first electric power to the TV.

### Example 2

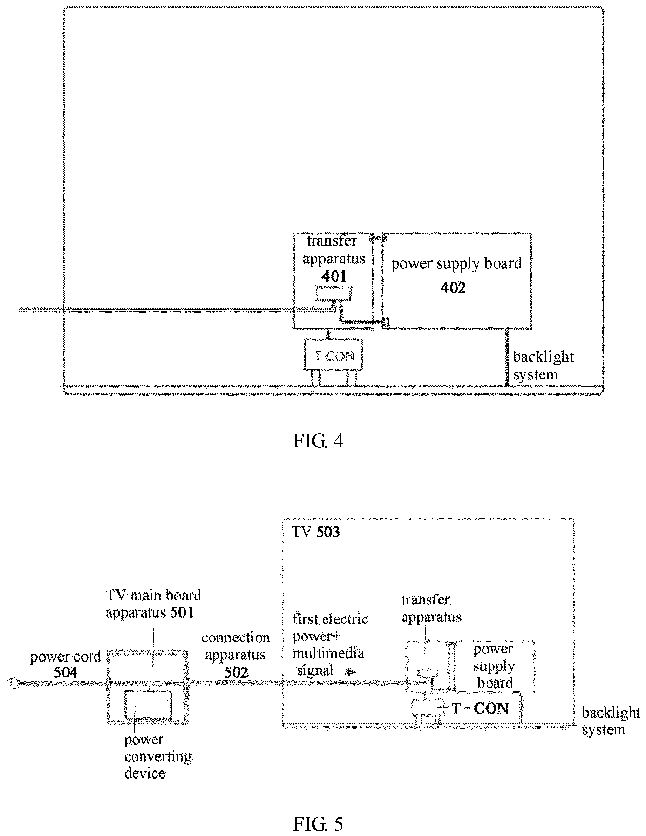

Fig. 4 is a schematic structural diagram showing a TV according to an example of the present disclosure. As shown in Fig. 4, the TV comprises a transfer apparatus 401 that receives a multimedia signal from a TV main board apparatus so as to allow it to be played and receives first electric power from the TV main board apparatus so as to supply the first electric power to a power supply board 402. The TV further comprises the power supply board 402 that converts the first electric power into third electric power for powering a backlight system of the TV.

The TV exemplified as such does not have a built-in TV main board. Instead, the TV main board apparatus is independent of the TV, so the TV does not need to have a large number of leading-out wires, and the TV main board can be repaired and replaced with ease. Besides, in this example, the transfer apparatus serves to supply electric power to the TV and transmit a multimedia signal. That way, when the TV is to be used, it only needs to connect to the TV main board apparatus and does not need additional power cords. As a result, the whole system becomes less complicated, easier to use and install, and simple and attractive in appearance.

For more details of the first electric power and multimedia signal, Example 1 could be referred to.

As an example, the power supply board 402 may convert the first electric power into fourth electric power for powering the transfer apparatus. For instance, the fourth electric power may be obtained by performing an AC-DC conversion on AC power of 220V (the first electric power). The voltage of the fourth electric power may be set as the transfer apparatus needs for power, such as 12V.

As an example, the power supply board 402 may include an AC-DC power converting device that converts the first electric power into the fourth electric power.

As an example, the backlight system of the TV may be a backlight bar. In this case, the third electric power may be a driving voltage for the backlight bar. The voltage of the third electric power may be decided by a person skilled in the art in light of actual application scenarios.

As an example, the TV may further comprise a time sequence controller (T-CON). The transfer apparatus may provide the T-CON with a multimedia signal (e.g., a video signal) so as to drive a display to display the multimedia signal. The transfer apparatus may comprise, for instance, a V-by-One (VBO, a signaling standard) interface, or a 51 Pin low voltage differential signaling (LVDS) interface, so as to supply a multimedia signal to the T-CON.

As an example, the transfer apparatus 401 may further comprise an interface component. A terminal configured to transmit the first electric power and a terminal configured to transmit the multimedia signal may be integrated in the interface component.

As an example of the interface component, its end face may be of configuration similar to that shown in Figs. 3a-3d. For more details of the interface component, the preceding parts about Figs. 3a-3d and the second interface could be referred to.

It should be understood by a person skilled in the art the present disclosure is not meant to place any restrictions on the configuration of the interface component, and it may be devised in light of actual needs, provided that a terminal configured to transmit the first electric power and a terminal configured to transmit the multimedia signal are integrated therein.

### Example 3

Fig. 5 is a schematic structural diagram showing a TV system according to an example of the present disclosure. As shown in Fig. 5, the TV system comprises: a TV main board apparatus 501, a TV 503, one power cord 504, and one connection apparatus 502. The power cord 504 is capable of connecting the TV main board apparatus 501 to a power supply so as to transmit first electric power from the power supply to the TV main board apparatus 501. The connection apparatus 502 is capable of connecting the TV main board apparatus 501 to the TV 503 so as to transmit a multimedia signal and the first electric power to the TV 503 from the TV main board apparatus 501. The TV main board apparatus 501 comprises a power converting device such as the power converting device 2023. The power converting device is capable of converting first electric power into second electric power for powering the TV main board apparatus 501.

This example separates a TV main board as an independent apparatus from a TV, so the TV does not need to have a large number of leading-out wires, and the TV main board can be repaired and replaced with ease. In this example, it is unnecessary to provide the TV and the main board with separate power supply lines. Instead, when the TV is to be used, connecting the TV main board apparatus to a power supply with one power cord and connecting the TV to the TV main board apparatus with one connection apparatus makes it possible to supply electric power to both the TV main board apparatus and the TV and transmit a signal therebetween. As a result, the whole system becomes less complicated, easier to use and install, and simple and attractive in appearance.

As an example of the TV main board apparatus 501, it may be of configuration similar to that of the TV main board apparatus in Example 1.

For instance, the TV main board apparatus may comprise a casing having at least one opening; and a TV main board accommodated in the casing, and having a first interface and a second interface exposed outside the casing via their respective openings, and the power converting device. The first interface is connectable to the power cord, and the second interface is connectable to the connection apparatus. The power converting device may be, for instance, an AC-DC power converting device. A terminal configured to transmit the first electric power and a terminal configured to transmit the multimedia signal may be integrated in the second interface. For instance, the second interface may have an HDMI, and a live wire terminal and a neutral wire terminal that are configured to transmit the first electric power.

As an example of the TV 503, it may be of configuration similar to that of the TV in Example 2.

For instance, the TV may comprise: a transfer apparatus that receives a multimedia signal from the TV main board apparatus so as to allowed the multimedia signal to be played and receives first electric power from the TV main board apparatus so as to supply it to a power supply board; and the power supply board that converts the first electric power into third electric power for powering a backlight system of the TV. The power supply board may convert the first electric power to fourth electric power for powering the transfer apparatus. The TV 503 may further comprise a time sequence controller (T-CON), wherein the transfer apparatus supplies the multimedia signal to the T-CON.

The transfer apparatus may comprise an interface component in which a terminal configured to transmit the first electric power and a terminal configured to transmit the multimedia signal are integrated. For instance, the interface section may comprise a high definition multimedia interface (HDMI), and a live wire terminal and a neutral wire terminal that are configured to transmit the first electric power.

As an example of the power cord 504, it may be a power cord selected by a person skilled in the art as needed and capable of transmitting first electric power (e.g., AC power of 220V).

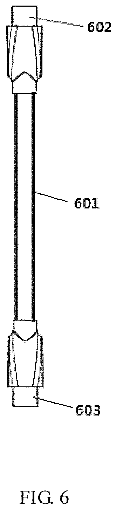

Fig. 6 is a schematic structural diagram showing an example of the connection apparatus 502. As shown in Fig. 6, the connection apparatus comprises: a connection line 601 capable of transmitting the multimedia signal and the first electric power that are supplied by the TV main board apparatus to the TV; a first connection section 602 located at one end of the connection line and connectable to the TV main board apparatus; and a second connection section 603 located at the other end of the connection line and connectable to the TV. For instance, the second interface of the TV main board apparatus is connectable to the first connection section 602 of the connection apparatus, and the transfer apparatus of the TV is connectable to the second connection section 603 of the connection apparatus. For instance, the transfer apparatus is connectable to the second connection section 603 via its interface component.

The first connection section 602 and the second connection section 603 may be of configuration similar to that shown in Figs. 3a-3d. For more details of the first and second connection sections, the preceding parts about Figs. 3a-3d and the second interface could be referred to. The first connection section 602 may be the same as or different from the second connection section 603 in configuration. The present disclosure is not meant to place any restrictions on that.

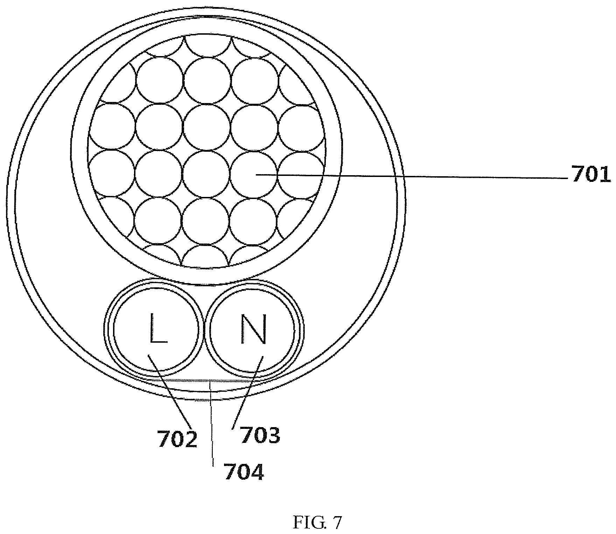

Fig. 7 is a schematic structural diagram showing the cross section of an exemplary connection line. In this example, the connection line may have: an HDMI transmission-line assembly 701 configured to transmit the multimedia signal; and a live wire 702 and a neutral wire line 703 that are configured to transmit the first electric power. The live wire and neutral wire line may be encased in a shielding section 704.

It should be understood by a person skilled in the art that Fig. 7 shows only one example of the connection line and its specific configuration may be devised by a person skilled in the art in light of actual needs, provided that it is capable of transmitting a multimedia signal and first electric power.

Each of the transmission lines in the connection line may be set in correspondence with and conductively connect to each of the terminals of the first and second connection sections.

As stated above, since there is the power converting device 2023 in the TV main board apparatus, the TV main board apparatus can supply electric power to itself. Consequently, the connection apparatus does not have to transmit the second electric power from the TV to the TV main board apparatus so as to supply electric power to the TV main board apparatus, so the number of pins of the first and second connection sections in the connection apparatus and the number of corresponding transmission lines in connection line only need to meet requirements for communication between the TV main board apparatus and the TV. As a result, the first and second connection sections can be made smaller, and the connection line can be made thinner accordingly.

### Examples of applications

There is provided here a work process of an example of the present disclosure in an exemplary application scenario so that the present disclosure can be understood with ease. It should be understood by a person skilled in the art that the process is provided to help comprehension of the present disclosure and is not meant to limit the present disclosure in any way.

Take the TV system shown in Fig. 5 as an example. The first interface of the TV main board apparatus 501 is connectable to an AC power supply of 220V via the power cord 504. Electric power of 220V (first electric power) provided by the power supply can be supplied to the TV 503 by the TV main board apparatus 501 via the connection apparatus 502. The TV main board apparatus 501 uses its built-in power converting device to convert the electric power of 220V (the first electric power) into DC power of 5V as second electric power and supplies the second electric power to itself for powering. The transfer apparatus in the TV 503 receives the electric power of 220V and supplies it to the power supply board. The power supply board converts a part of the power into a driving voltage for the backlight bar, another part into DC power of 12V as fourth electric power for powering the transfer apparatus. The powered TV main board apparatus 501 supplies the converted HDMI signal to the TV 503 via the connection apparatus 502. The powered transfer apparatus can supply the HDMI signal to another component such as the T-CON so as to play the multimedia signal.

The above description relates only to embodiments of the present disclosure. The protection scope of the present disclosure is not limited thereto and covers variants or replacements which a person skilled in the art can easily think of and that fall within the technical range of the present disclosure. The protection scope of the present disclosure is determined by the appended claims.

### Practical applicability

Examples of the present disclosure separate a TV main board as an independent apparatus from a TV, so the TV does not need to have a large number of leading-out wires, and the TV main board can be repaired and replaced with ease. In those examples, it is unnecessary to provide the TV and the main board with separate power supply lines. Instead, only connecting the TV to the TV main board apparatus and connecting the TV main board apparatus to electronic power make it possible to supply electric power to both the TV main board apparatus and the TV and transmit a signal therebetween, As a result, the whole system becomes less complicated, easier to use and install, and simple and attractive in appearance.

## Claims

1. A TV main board apparatus, comprising:
a casing having at least one opening; and
a TV main board accommodated in the casing, and comprising a first interface and a second interface that are exposed outside the casing via their respective openings, and a power converting device,
wherein the first interface is capable of connecting to a power supply so as to receive first electric power,
wherein the second interface is capable of connecting to a TV so as to transmit a multimedia signal and the first electric power to the TV, and
wherein the power converting device is configured to convert the first electric power into second electric power for powering the TV main board apparatus.

2. The TV main board apparatus according to claim 1, wherein the power converting device is an AC-DC power converting device.

3. The TV main board apparatus according to claim 1, wherein a terminal configured to transmit the first electric power and a terminal configured to transmit the multimedia signal are integrated in the second interface.

4. The TV main board apparatus according to any one of claims 1-3, wherein the second interface comprises a high definition multimedia interface (HDMI).

5. The TV main board apparatus according to any one of claims 1-3, wherein the second interface comprises a live wire terminal and a neutral wire terminal that are configured to transmit the first electric power.

6. A TV, comprising:
a transfer apparatus configured to receive a multimedia signal from a TV main board apparatus so as to allow the multimedia signal to be played and receive first electric power from the TV main board apparatus so as to supply the first electric power to a power supply board; and
the power supply board configured to convert the first electric power into third electric power for powering a backlight system of the TV.

7. The TV according to claim 6, wherein the power supply board is configured to convert the first electric power into fourth electric power for powering the transfer apparatus.

8. The TV according to claim 6, further comprising a time sequence controller (T-CON), wherein the transfer apparatus is configured to provide the T-CON with the multimedia signal.

9. The TV according to claim 6, wherein the transfer apparatus comprises an interface component in which a terminal configured to transmit the first electric power and a terminal configured to transmit the multimedia signal are integrated.

10. The TV according to claim 9, wherein the interface component comprises a high definition multimedia interface (HDMI).

11. The TV according to claim 9, wherein the interface component comprises a live wire terminal and a neutral wire terminal that are configured to transmit the first electric power.

12. A TV system, comprising a TV main board apparatus, a TV, one power cord, and one connection apparatus,
wherein the power cord is capable of connecting the TV main board apparatus to a power supply so as to transmit first electric power to the TV main board apparatus from the power supply,
the connection apparatus is configured to connect the TV main board apparatus to the TV so as to transmit a multimedia signal and the first electric power to the TV from the TV main board apparatus, and
the TV main board apparatus comprises a power converting device configured to convert the first electric power into second electric power for powering the TV main board apparatus.

13. The TV system according to claim 12, wherein the connection apparatus comprises:
a connection line configured to transmit the multimedia signal and the first electric power that are supplied by the TV main board apparatus to the TV;
a first connection section located at one end of the connection line and connected to the TV main board apparatus; and
a second connection section located at the other end of the connection line and connected to the TV.

14. The TV system according to claim 12, wherein the TV main board apparatus comprises:
a casing having at least one opening; and
a TV main board accommodated in the casing, and comprising a first interface and a second interface exposed outside the casing via their respective openings, and the power converting device,
wherein the first interface is connected to the power cord, and
wherein the second interface is connected to the connection apparatus.

15. The TV system according to claim 12, wherein the power converting device is an AC-DC power converting device.

16. The TV system according to claim 14, wherein a terminal configured to transmit the first electric power and a terminal configured to transmit the multimedia signal are integrated in the second interface.

17. The TV system according to claim 14, wherein the second interface comprises a high definition multimedia interface (HDMI).

18. The TV system according to claim 14, wherein the second interface comprises a live wire terminal and a neutral wire terminal that are configured to transmit the first electric power.

19. The TV system according to claim 12, wherein the TV comprises:
a transfer apparatus configured to receive the multimedia signal from the TV main board apparatus so as to allow the multimedia signal to be played and receive the first electric power from the TV main board apparatus so as to supply the first electric power to a power supply board; and
the power supply board configured to convert the first electric power into third electric power for powering a backlight system of the TV.

20. The TV system according to claim 19, wherein the power supply board is configured to convert the first electric power into fourth electric power for powering the transfer apparatus.

21. The TV system according to claim 19, wherein the TV further comprises a time sequence controller (T-CON),
wherein the transfer apparatus is configured to provide the T-CON with the multimedia signal.

22. The TV system according to claim 19, wherein the transfer apparatus comprises an interface component in which a terminal configured to transmit the first electric power and a terminal configured to transmit the multimedia signal are integrated.

23. The TV system according to claim 22, wherein the interface component comprises a high definition multimedia interface (HDMI).

24. The TV system according to claim 22, wherein the interface component comprises a live wire terminal and a neutral wire terminal that are configured to transmit the first electric power.
